# EUROPEAN PATENT SPECIFICATION

(11) **EP 3 606 056 B1**
(45) Date of publication and mention of the grant of the patent: **28.12.2022**
(21) Application number: 18777933.5
(22) Date of filing: 07.03.2018
(51) Int. Cl.: H04N 7/18, B61L 25/04

(54) **MONITORING SYSTEM AND MONITORING METHOD**
ÜBERWACHUNGSSYSTEM UND ÜBERWACHUNGSVERFAHREN
SYSTÈME DE SURVEILLANCE ET PROCÉDÉ DE SURVEILLANCE

(30) Priority: 28.03.2017 JP 2017062942
(43) Date of publication of application: 05.02.2020
(73) Proprietor: Hitachi Kokusai Electric Inc., Tokyo 105-8039 (JP)
(72) Inventor: OHKI, Kana, Kodaira-shi, Tokyo 187-8511 (JP)
(74) Representative: Samson & Partner Patentanwälte mbB
(86) International application number: PCT/JP2018/008790
(87) International publication number: WO 2018/180310

(56) References cited:
- EP-A1- 2 950 285
- EP-A1- 3 125 542
- WO-A1-2015/145736
- JP-A- 2007 235 655
- JP-A- 2007 235 655
- JP-A- 2009 111 677
- US-A1- 2012 307 071

## Description

### Technical Field

The present invention relates to a monitoring system and a monitoring method, and more particularly to a monitoring system and a monitoring method for doors of a railway vehicle.

### Background

Recently, in addition to the monitoring of the inside and outside of a railway vehicle and a station platform in a railway monitoring system, the monitoring of vehicle doors is required to confirm whether the vehicle doors are normally operated (for example, no passenger or foreign matter being stuck in the door) when a train is stopped at the station platform to open and close the vehicle doors. Various techniques for a train door monitoring device have been proposed (see, e.g., Patent Document 1).

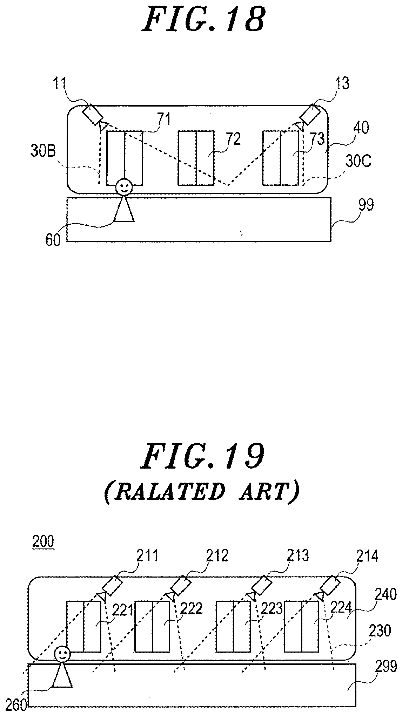

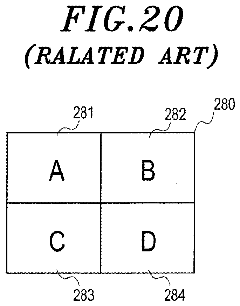

FIG. 19 shows an example of a conventional vehicle door monitoring system 200. Here, one vehicle 240 is shown as an example. FIG. 20 shows an example of a monitor screen 280 for assigning videos acquired by a first to a fourth monitoring camera 211 to 214.

The first to the fourth monitoring camera 211 to 214 correspondingly arranged to monitor a first to a fourth door 221 to 224 are attached around the doors, respectively. By assigning and displaying videos from the first to the fourth monitoring camera 211 to 214 on the monitor observed by an operator in a conductor room in the train, the station platform, a train control center of the railway company, and the like, abnormalities of the first to the fourth door 221 to 224 are monitored. Here, the videos from the first to the fourth monitoring camera 211 to 214 are assigned to and displayed on four sections 281 to 284 of a monitor divided in a 2×2 form, respectively.

### <Prior Art>

### Patent Document 1: Japanese Patent No. 5340123

However, in the conventional vehicle door monitoring system 200 shown in FIGS. 19 and 20, when the first monitoring camera 211 breaks down or malfunctions, maintenance such as the replacement of the broken or malfunctioning first monitoring camera 211 is necessary. Further, no video is displayed on the monitor screen (the divided section 281 in FIG. 20) on which the video from the first monitoring camera 211 is supposed to be displayed until the broken or malfunctioning first monitoring camera 211 is replaced. For this reason, the vehicle door 221 cannot be monitored in real time, which hinders the system operation.

In particular, in the case that the monitoring camera is attached to the vehicle of the train, it is difficult to perform restoration and repair work during daytime operation, which may extend the time during which the monitoring operation cannot be performed. Further, one of the reasons for monitoring the vehicle door with the monitoring camera is to reduce the burden of the crew. For example, on a one-man operated train, only one crew member can be responsible for visual confirmation of the vehicle doors. This visual confirmation requires the crew member to step outside of the vehicle to visually confirm the vehicle doors, which imposes a heavy burden on the crew member. Therefore, an operation mode in which the monitoring camera is attached outside of the vehicle and the video from the monitoring camera can be visually confirmed in the conductor room has been considered. In this operation mode, however, if the camera monitoring the vehicle door breaks down, the crew member must go outside of the vehicle each time to visually confirm the vehicle door, which also increases the burden on the crew. In other words, regarding a monitoring operation that requires real-time performance, there has been a demand for a technique that realizes the monitoring operation with practically no downtime by effectively reducing the time during which the monitoring cannot be performed, even in the case when the monitoring camera breaks down. Further, there also has been a demand for a technique that can reduce the burden of requiring visual confirmation by a crew member caused by a breakdown or malfunction of the monitoring camera and can realize a reliable monitoring operation that can cope relatively easily with various operation modes.

Further patent document EP 2950285 A1 relates to a configuration of a camera which is a replacement for one of a plurality of cameras in a network. The configuration comprises inter alia detecting that a new camera has connected to the network, determining that the new camera is a replacement for a particular camera among one or more candidate cameras if property data of the new camera matches property data of the particular camera; and configuring the new camera based on configuration settings corresponding to the particular camera.

Further patent document US 2012/307071 A1 relates to a monitoring camera system including a plurality of cameras and a camera controller to control the cameras, each camera is allocated at a position at which the camera can be photographed by at least one of the other cameras by changing the shooting direction of the one other camera. At occurrence of an abnormality in a camera, each camera conducts a camera control operation based on control processing described in a camera control table held in an internal memory of the camera or the camera controller, to photograph the camera with an abnormality and the periphery of the camera.

Still further patent document EP 3125542 A1 describes that IP-based monitor camera systems have been used to accomplish savings in labor in operating railway vehicles, such as passenger-carrying vehicles, and to confirm safety at multiple doors thereof. More specifically, this document relates to a monitoring system which allows a train driver or a train crew to use a monitor installed in a leading or rearmost vehicle or the like for visually confirming motions of passengers in association with opening or closing of doors of the passenger-carrying vehicles at a time so as to ensure more safe and efficient operation of the passenger-carrying vehicle. Additionally, in the case where a train set of passenger-carrying vehicles is formed, when the areas of the trimming frames of images captured by monitor cameras are set for displaying the images on a monitor screen, the areas of the trimming frames of the monitor cameras are automatically read and set so that the trimming frames can be set for the train set of vehicles quickly, readily and reliably.

### Summary

In view of the above, an object of the present invention is to solve the above problems.

In accordance with an aspect of the present invention, there is provided a monitoring system for monitoring multiple vehicle doors of a train with multiple monitoring cameras, the monitoring system comprising: a controller configured to acquire videos from the multiple monitoring cameras while monitoring states of the multiple monitoring cameras. When the controller determines any one of the multiple monitoring cameras as a monitoring camera in an abnormal state in which the monitoring camera does not properly capture a monitoring target area, the controller extracts, in a video from a different monitoring camera that is paired with the monitoring camera in the abnormal state among the multiple monitoring cameras, a video of the monitoring target area of the monitoring camera in the abnormal state and a video of a monitoring target area of the different monitoring camera.

Further, when the controller determines that there is the monitoring camera in the abnormal state, the controller may adjust an angle of view originally set in the different monitoring camera to a wide-angle view to cover the monitoring target area of the monitoring camera in the abnormal state and the monitoring target area of the different monitoring camera.

Further, capturing ranges of the respective multiple monitoring cameras may be set in advance to include monitoring target areas of the different monitoring cameras paired with the respective multiple monitoring cameras. When the controller determines that the multiple monitoring cameras are in a normal state, the controller may extract monitoring target areas of the multiple monitoring cameras in videos captured by the multiple monitoring cameras, respectively. When the controller determines that there is the monitoring camera in the abnormal state, the controller may extract, in the video from the different monitoring camera that is paired with the monitoring camera in the abnormal state among the multiple monitoring cameras, the video of the monitoring target area of the monitoring camera in the abnormal state and the video of the monitoring target area of the different monitoring camera.

In accordance with another aspect of the present invention, there is provided a monitoring method for monitoring multiple vehicle doors of a train with multiple monitoring cameras, the monitoring method including: a state monitoring process of monitoring states of the multiple monitoring cameras; a video acquisition process of acquiring videos of monitoring target areas set in the multiple monitoring cameras from the multiple monitoring cameras, respectively, when the multiple monitoring cameras are in a normal state; and a video acquisition process in an abnormal state in which any one of the multiple monitoring cameras is determined as a monitoring camera in an abnormal state, wherein the video acquisition process includes, in a video from a different monitoring camera other than the monitoring camera in the abnormal state, acquiring a video of a monitoring target area of the monitoring camera in the abnormal state together with a video of a monitoring target area of the different monitoring camera that is paired with the monitoring camera in the abnormal state.

The scope of the invention is defined by the second embodiment described below.

### Effect

In accordance with the present invention, in a monitoring operation that requires real-time performance, it is possible to provide a technique for realizing the monitoring operation with practically no downtime by effectively reducing the time during which the monitoring cannot be performed, even in the case when a monitoring camera breaks down. Further, it is possible to provide a technique for reducing the burden of requiring visual confirmation by a crew member caused by the breakdown or failure of the monitoring camera and realizing a reliable monitoring operation that can cope relatively easily with various operation modes.

### Brief Description of the Drawings

FIG. 1 schematically shows an example of a layout of a monitoring system for monitoring an area around a doorway from the inside of a train according to a first embodiment.
FIG. 2 is a diagram for explaining mainly a connection of components constituting the monitoring system according to the first embodiment.
FIG. 3 shows a vehicle of the train stopped at a station platform according to the first embodiment.
FIG. 4 shows an example of a display in which videos from a first to a fourth monitoring camera are displayed on a monitor according to the first embodiment.
FIG. 5 shows an example in which display directions are unified in displaying the videos from the first to the fourth monitoring camera on the monitor.
FIG. 6 schematically shows an operation mode when the first monitoring camera breaks down according to the first embodiment.
FIG. 7 shows an example of a video acquisition by the second monitoring camera when the first monitoring camera breaks down according to the first embodiment.
FIG. 8 shows an example of a display on a monitor in the example shown in FIG. 7 according to the first embodiment.
FIG. 9 is a flowchart of the video acquisition by the second monitoring camera when the first monitoring camera breaks down according to the first embodiment.
FIG. 10 shows an operation sequence of the video acquisition by the second monitoring camera when the first monitoring camera breaks down according to the first embodiment.
FIG. 11 shows a vehicle of the train stopped at a station platform according to a second embodiment.
FIG. 12 is a flowchart of a video acquisition by the second monitoring camera when the first monitoring camera breaks down according to the second embodiment.
FIG. 13 shows an operation sequence of the video acquisition by the second monitoring camera when the first monitoring camera breaks down according to the second embodiment.
FIG. 14 is a flowchart of a video acquisition by the second monitoring camera when the first monitoring camera is abnormal according to a third embodiment.
FIG. 15 shows an operation sequence of the video acquisition by the second monitoring camera when the first monitoring camera is abnormal according to the third embodiment.
FIG. 16 is a flowchart of a video acquisition by the second monitoring camera when the first monitoring camera breaks down according to a fourth embodiment.
FIG. 17 shows an operation sequence of the video acquisition by the second monitoring camera when the first monitoring camera breaks down according to the fourth embodiment.
FIG. 18 schematically shows an example of a layout of a monitoring system in the case that the number of vehicle doors is an odd number according to a fifth embodiment.
FIG. 19 shows an example of a conventional vehicle door monitoring system.
FIG. 20 shows an example of a display on a monitor of the conventional vehicle door monitoring system.

### Detailed Description

Hereinafter, embodiments of the present invention (hereinafter simply referred to as "embodiments") will be described in detail with reference to the accompanying drawings. The outline of the embodiments is as follows: (1) The monitoring camera is set to have a wide-angle view to cover two or more vehicle doors. When the monitoring camera is in an abnormal state (e.g., breakdown or failure, or a monitoring stopped state for maintenance), the monitoring operation is continued with another monitoring camera currently in a normal state. (2) In a monitor having display sections to which videos from the monitoring cameras are assigned, a video from a monitoring camera that performs the monitoring operation instead of a broken or malfunctioning monitoring camera is assigned to a display section where no video is displayed due to the breakdown of the corresponding monitoring camera. Therefore, it is possible to maintain the same operability as in the normal operation.

The following technical effects are obtained: (1) When the monitoring camera monitoring the vehicle door breaks down or malfunctions and the video from the broken or malfunctioning monitoring camera is not displayed on the monitor, the video of the monitoring camera that performs the monitoring operation instead of the broken or malfunctioning monitoring camera is assigned to a display section of the monitor in which the video of the broken monitoring camera is supposed to be displayed. Therefore, it is possible to display the videos in the same manner as in the normal operation and further improve the availability and monitoring facilitation. (2) When the monitoring camera monitoring the vehicle door breaks down, it becomes possible to continue monitoring without any lost time until the monitoring camera is restored and repaired, thereby improving the work efficiency and availability. (3) When the monitoring camera monitoring the vehicle door breaks down, it is not necessary for a crew member to step outside of the vehicle and visually confirm the vehicle door, thereby improving the work efficiency and monitoring facilitation while reducing the burden on the crew.

### <First embodiment>

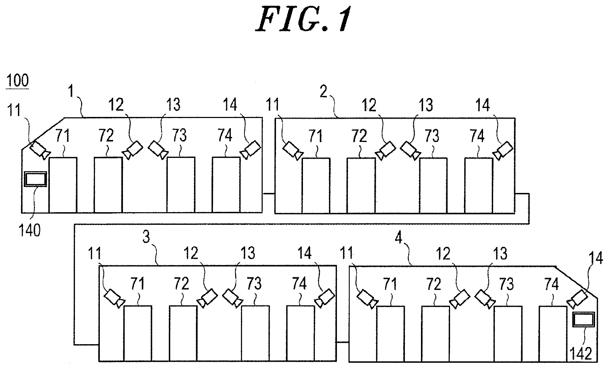

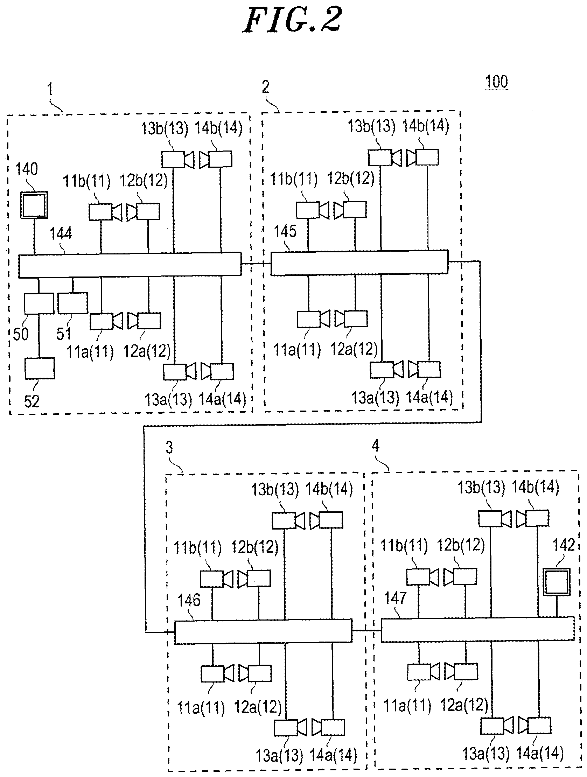

FIG. 1 schematically shows an example of a layout of a railway monitoring system 100 installed in a single train set to monitor an area around a doorway (door) from the inside of the train. FIG. 2 is a block diagram for explaining an embodiment of a configuration of the railway monitoring system 100. FIG. 1 describes mainly an installation and arrangement of the railway monitoring system 100 in the train while FIG. 2 describes mainly connections among respective components constituting the railway monitoring system 100. Frames of broken lines shown in FIG. 2 indicate a first to a fourth vehicle 1 to 4 shown in FIG. 1, respectively. All the components constituting the railway monitoring system 100 may be connected with one another by a wired connection using, e.g., a network cable.

The train shown in FIG. 1 is a four-vehicle train including a first vehicle 1 serving as a leading vehicle, a second vehicle 2 and a third vehicle 3 serving as intermediate vehicles, and a fourth vehicle 4 serving as a rearmost vehicle. The railway monitoring system 100 is installed in the vehicle of the train. The following description will be made on the assumption that a forward movement of the first vehicle 1 serving as the leading vehicle is the traveling direction of the train.

Each of the vehicles (i.e., the first to the fourth vehicle 1 to 4) includes four doors on one side (eight doors on both sides). For example, the four doors are arranged on one side (e.g., the left side of the traveling direction) of each of the vehicles from the traveling direction side in order of a first door 71, a second door 72, a third door 73 and a fourth door 74. The other doors are also arranged at the other side (e.g., the right side of the traveling direction) from the traveling direction side in order of the first door 71, the second door 72, the third door 73 and the fourth door 74.

Passengers get on and off each vehicle from the doors opened either at the left side or the right side, or at both sides of the vehicle stopped at a station platform.

A first to a fourth monitoring camera 11 to 14 are installed to correspond to the first to the fourth door 71 to 74, respectively, for monitoring the getting on and off state. Each of the first to the fourth monitoring camera 11 to 14 may be an IP camera, for example. Further, FIG. 1 only shows the doors at the left side and the monitoring cameras associated with the doors at the left side without showing the doors and the associated monitoring cameras at the other side (right side). Any other structures besides the monitoring cameras are common regardless of the doors either at the left side or the right side.

The first vehicle 1 serving as the leading vehicle is provided with a monitor PC 140, and the fourth vehicle 4 serving as the rearmost vehicle is also provided with a monitor PC 142. Here, a plurality of the monitor PCs 140 and a plurality of the monitor PCs 142 may be provided.

The driver can check videos captured by the first to the fourth monitoring cameras 11 to 14 on the monitor PCs 140 and 142. For example, the videos captured by the monitoring cameras of one vehicle may be displayed on multiple sections by dividing a display into the multiple sections, and the videos captured by the monitoring cameras of the vehicles may be sequentially switched and displayed from the videos for one vehicle to the videos for another vehicle.

The railway monitoring system 100 is installed in the train configured by connecting the first to the fourth vehicles 1 to 4 as shown in FIG. 1 or FIG. 2. The railway monitoring system 100 includes the first to the fourth monitoring cameras 11 to 14, the monitor PCs 140 and 142, L2-SWs (layer-2 switches) 144 to 147, a server 50, a video recorder 51 and a host server 52. A power supply cable (not shown) supplies power from power supply units (not shown) of the first to the fourth vehicles 1 to 4 to the respective components.

The first vehicle 1 serving as the leading vehicle includes the server (controller) 50, the video recorder 51, the host server 52, the first to the fourth monitoring cameras 11 to 14 (11a to 14a and 11b to 14b), the monitor PC 140, and the L2-SW 144.

The server 50, the video recorder 51, the monitor PC 140, and the first to the fourth monitoring cameras 11 to 14 are connected to the L2-SW 144, and the host server 52 is connected to the server 50. The L2-SW 144 is connected to the L2-SW 145 installed in the subsequent second vehicle 2.

The fourth vehicle 4 serving as the rearmost vehicle includes the first to the fourth monitoring cameras 11 to 14 (11a to 14a and 11b to 14b), the monitor PC 142 and the L2-SW 147. The first to the fourth monitoring cameras 11 to 14 and the monitor PC 142 are connected to the L2-SW 147. The L2-SW 147 is connected to the L2-SW 146 installed in the preceding third vehicle 3.

The host server 52 serves as a train management system (TMS) to manage a train operation, for example. The host server 52 outputs train operation information to the server 50 at a predetermined cycle during the train operation. The train operation information includes at least train speed information, doorway opening/closing information (information indicating whether the entrance door is open or closed), information on the entrance door of the vehicle at the next stop or the station platform at which the train is currently stopped (e.g., information indicating that the entrance door is either at the left side or the right side), and the number of vehicles.

The second vehicle 2 serving as the intermediate vehicle includes the first to the fourth monitoring cameras 11 to 14 (11a to 14a and 11b to 14b) and the L2-SW 145. The L2-SW 145 is connected to the L2-SW 144 installed in the preceding first vehicle 1 and the L2-SW 146 installed in the subsequent third vehicle 3 with network cables. Similarly to the second vehicle 2, the third vehicle 3 includes the first to the fourth monitoring cameras 11 to 14 (11a to 14a and 11b to 14b) and the L2-SW 146. The L2-SW 146 is connected to the L2-SW 145 installed in the preceding second vehicle 2 and the L2-SW 147 installed in the subsequent fourth vehicle 4 with network cables.

Thus, the L2-SWs between the leading first vehicle 1 and the intermediate second vehicle 2, between the intermediate second vehicle 2 and the intermediate third vehicle 3, and between the intermediate third vehicle 3 and the rearmost fourth vehicle 4 are connected to each other with the network cables, so that a single network is constructed in the train by connecting the L2-SWs installed in the adjacent vehicles with the network cables.

The network cables are connected to, e.g., a junction box (not shown) through the vehicle floor so as to couple the vehicles by connecting the junction boxes of the adjacent vehicles by using a jumper wire (not shown).

The driver is on board in the first vehicle 1 and the driver in the first vehicle 1 alone performs the control of the train (operation and opening and closing of the entrance door) in the railway monitoring system 100 shown in FIGS. 1 and 2.

All of the first to the fourth monitoring cameras 11 to 14 (11a to 14a and 11b to 14b) are operated to capture videos within predetermined visual fields, respectively, at a predetermined capture frame rate. The first to fourth monitoring cameras 11 to 14 compress the captured videos (live videos) in a format such as H.264, MPEG-4, JPEG or the like, and transmit the data to the video recorder 51 and the monitor PCs 140 and 142 through the L2-SWs and the network cables.

The video recorder 51 constantly records the input videos while correlating the monitoring camera that has captured the video with the time of capturing. In response to the instruction of the server 50, the monitor PCs 140 and 142 execute an image processing such as expansion and trimming of all of the live videos and recorded videos captured by the first to the fourth monitoring cameras 11 to 14, and display the videos on a screen.

Further, the recorded videos will be used for analytical materials and evidence mainly in the case of accidents and crime. The operator will set the main settings for the server 50, the monitor PCs 140 and 142, the first to the fourth monitoring cameras 11 to 14 (11a to 14a and 11b to 14b), and the video recorder 51 in advance upon the start of the system operation.

In addition, the first to the fourth monitoring cameras 11 to 14 (11a to 14a and 11b to 14b) transmit videos to the video recorder 51 and the monitor PCs 140 and 142 at a predetermined transmission frame rate. Alternatively, the first to the fourth monitoring cameras 11 to 14 (11a to 14a and 11b to 14b) may transmit the videos to the video recorder 51 and the monitor PCs 140 and 142 at the predetermined transmission frame rate in response to transmission requests sent from the monitor PCs 140 and 142 through the L2-SWs.

Upon the start of the system operation, the operator is allowed to set in advance whether the videos captured by the first to the fourth monitoring cameras 11 to 14 (11a to 14a and 11b to 14b) are transmitted automatically at the predetermined frame rate, or transmitted in response to the transmission requests from the monitor PCs from the monitor PCs 140 and 142. It is also possible for the driver to switch the video transmission by operating the server 50.

Further, the server 50 may be also configured to control an angle of view and a capturing direction of each of the first to the fourth monitoring cameras 11 to 14 (11a to 14a and 11b to 14b). In the case where the monitoring cameras themselves have a function of changing the angle of view and the capturing direction thereof, the server 50 outputs an instruction for such a change to the respective monitoring cameras to control the angle of view and the capturing direction of each of the monitoring cameras.

In the case where there is no function described above, an area to be extracted is controlled when extracting an area to be actually displayed from the captured video. In addition, the server 50 is also configured to monitor an operation state of each of the first to the fourth monitoring cameras 11 to 14 for occurrences of a failure or breakdown. Upon the occurrence of the failure or breakdown, the server 50 continues the monitoring of the train, under certain conditions, through processes to be described later.

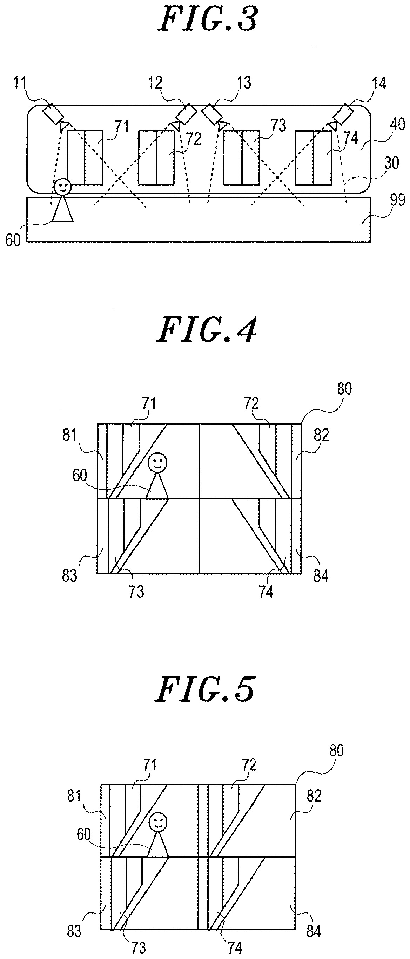

Next, with reference to FIGS. 3 to 10, an operation mode of the first to the fourth monitoring cameras 11 to 14 will be described in detail. Here, a description will be given focusing on one vehicle 40.

FIG. 3 shows a vehicle 40 of the train stopped at the station platform 99.

The first to the fourth monitoring cameras 11 to 14 are installed outside of the vehicle 40 to monitor areas around the first to the fourth doors 71 to 74, respectively. Here, the first monitoring camera 11 is set to be paired with the second monitoring camera 12, and the third monitoring camera 13 is set to be paired with the fourth monitoring camera 14.

Specifically, when one of the pair of the monitoring cameras breaks down, the other one of the pair may capture a monitoring area of the broken monitoring camera to display the monitoring area of the broken monitoring camera on a monitor 80. For example, when the first monitoring camera 11 breaks down, the second monitoring camera 12 captures areas around both of the first door 71 and the second door 72.

More specifically, the first monitoring camera 11 is attached to an upper-front side of the first door 71, and a lower-rear side of the first door 71 is set as the capturing direction of the first monitoring camera 11. The second monitoring camera 12 is attached to an upper-rear side of the second door 72, and a lower-front side of the second door 72 is set as the capturing direction of the second monitoring camera 12. The third monitoring camera 13 is attached to an upper-front side of the third door 73, and a lower-rear side is of the third door 73 set as the capturing direction of the third monitoring camera 13. The fourth monitoring camera 14 is attached to an upper-rear side of the fourth door 74, and a lower-front side of the fourth door 74 is set as the capturing direction of the fourth monitoring camera 14.

FIG. 4 shows an example of a display in which the videos from the first monitoring camera 11 monitoring the first door 71, the second monitoring camera 12 monitoring the second door 72, the third monitoring camera 13 monitoring the third door 73, and the fourth monitoring camera 14 monitoring the fourth vehicle 74 are displayed on 4 divided sections of the monitor 80, respectively.

Further, in order for crew members including the driver to easily monitor the videos, the videos from the second monitoring camera 12 and the fourth monitoring camera 14 may be reversed and displayed as shown in FIG. 5 to unify the monitoring directions of all cameras. The reversal of the video is selectively determined depending on the operation mode.

The first to the fourth monitoring cameras 11 to 14 acquire videos of the first to the fourth doors 71 to 74 and the areas therearound, respectively, and display the acquired videos on the monitor 80 (e.g., the monitor PCs 140 and 142 in FIG. 1 and a monitor in the train control room (not shown)). The server 50 periodically monitors the state of each of the first to the fourth monitoring cameras 11 to 14.

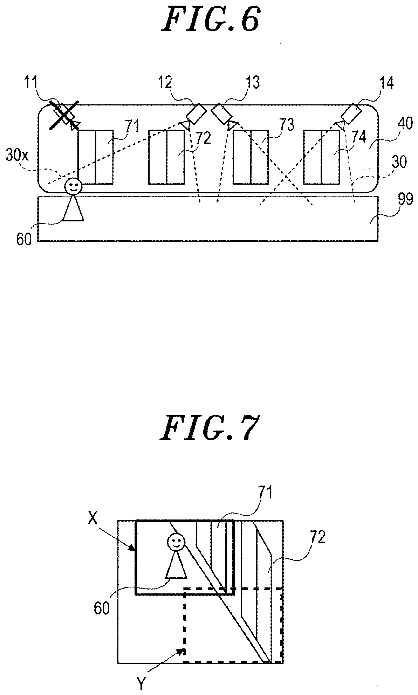

Hereinafter, with reference to FIGS. 6 to 10, the case of monitoring the pair of the first monitoring camera 11 and the second monitoring camera 12 and a specific example in which the first monitoring camera 11 breaks down while the pair of the first monitoring camera 11 and the second monitoring camera 12 is monitored in the above-described operation mode will be described.

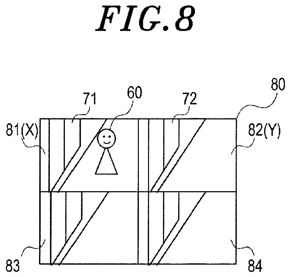

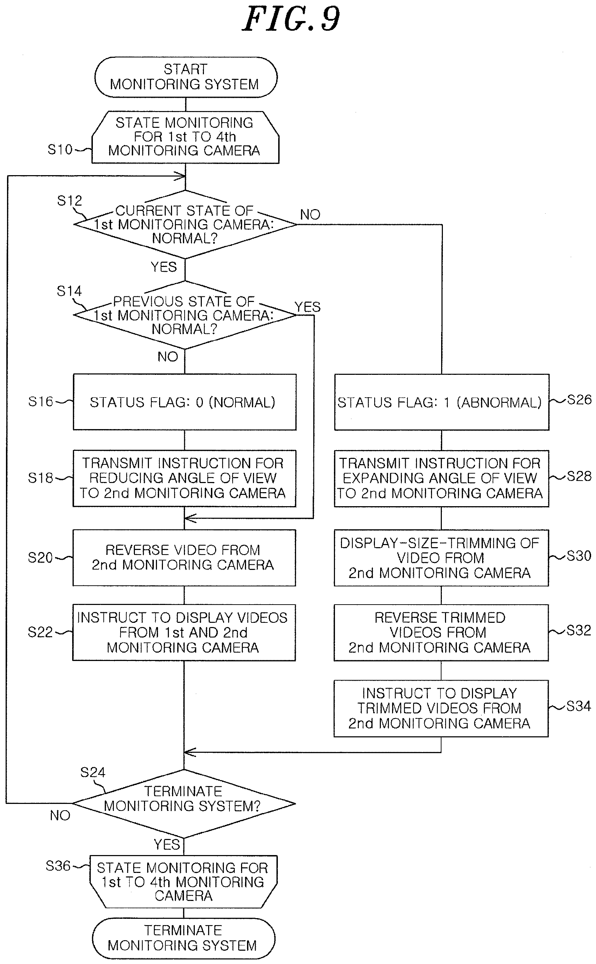

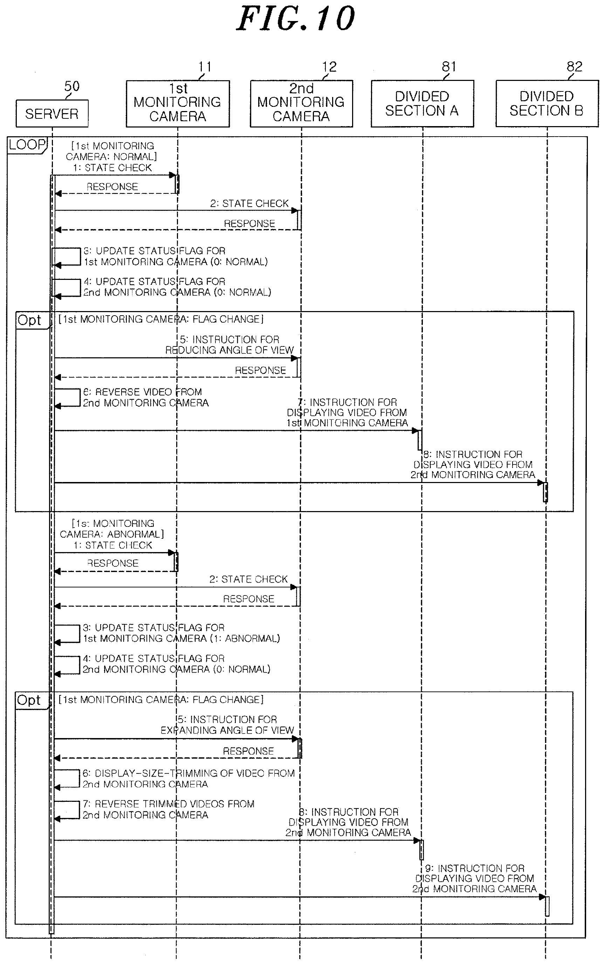

FIG. 6 schematically shows the operation mode when the first monitoring camera 11 breaks down. FIG. 7 shows an example of video acquisition by the second monitoring camera 12 when the first monitoring camera 11 breaks down. FIG. 8 shows an example of a display on the monitor 80 when the first monitoring camera 11 breaks down. FIG. 9 is a flowchart. FIG. 10 shows an operation sequence for the server 50, the first monitoring camera 11, the second monitoring camera 12, and the divided section A 81 and the divided section B 82 of the monitor 80.

When the railway monitoring system is activated, the server 50 monitors the states of the first to the fourth monitoring cameras 11 to 14 and continues displaying the monitoring videos on the monitor 80 (steps S10 to S36).

The server 50 determines whether or not the state of the first monitoring camera 11 is normal (step S12). That is, the server 50 detects the failure or breakdown of the first monitoring camera 11.

If it is determined that the state of the first monitoring camera 11 is normal (YES in step S12), the server 50 determines whether or not the previous state of the first monitoring camera 11 was normal (step S14). That is, the server 50 determines whether a status flag of the first monitoring camera 11 managed in the server 50 has changed from "abnormal" to "normal," or whether the state of "normal" has continued.

If it is determined that the previous status flag was "abnormal" (NO in step S14), the server 50 determines that the first monitoring camera 11 has been restored from the failure, and the server 50 updates the status flag of the first monitoring camera 11 to "normal" (step S16). Then, the server 50 transmits an instruction for reducing the angle of view (that is, an instruction for returning the size of the angle of view to the angle used in the normal operation) to the second monitoring camera 12 that is currently operated with the wide-angle view (step S18). The second monitoring camera 12 that has received the instruction for reducing the angle of view adjusts the angle of view so as to return the angle back to the original size used in the normal operation.

If it is determined that the previous status flag was "normal" (YES in step S14) or after the instruction for reducing the angle of view is transmitted to the second monitoring camera 12 (step S18), the server 50 reverses the video acquired from the second monitoring camera 12 (step S20) and instructs, as a display process during the normal operation, the monitor 80 to display the videos from the first monitoring camera 11 and the second monitoring camera 12 on the monitor 80 (step S22).

Thereafter, the display update of the divided screens of the monitor 80 displaying the first and the second monitoring cameras 11 and 12 is performed. The video from the first monitoring camera 11 is displayed on the divided section A 81, and the video from the second monitoring camera 12 is displayed on the divided section B 82. When the display of the videos is completed, the server 50 determines whether or not to terminate the railway monitoring system (step S24). If it is determined to terminate the railway monitoring system (YES in step S24), the processing flow in steps S10 to S36 is terminated. If it is determined not to terminate the railway monitoring system (NO in step S24), the process returns to the monitoring of the state of the first monitoring camera 11 (step S12).

In the process of determining whether or not the state of the first monitoring camera 11 is normal, if it is determined that the breakdown or failure of the first monitoring camera 11 is detected (NO in step S12), the server 50 performs a video acquisition process for the "abnormal" state (steps S26 to S34). That is, the server 50 updates the status flag of the first monitoring camera 11 to "abnormal" (step S26) and transmits an instruction for expanding the angle of view to the second monitoring camera 12 that is paired with the first monitoring camera 11 (step S28).

The second monitoring camera 12 that has received the instruction for expanding the angle of view adjusts the angle of view so as to obtain a wider angle of view than that used in the normal operation.

In this operation mode, as shown in FIG. 6, a monitoring range 30x of the second monitoring camera 12 is adjusted to cover a wide area including both the first door 71 and the second door 72.

Therefore, the second monitoring camera 12 captures the video through which both the first door 71 and the second door 72 can be monitored.

The server 50 performs a display size trimming process for extracting areas around the first door 71 and the second door 72 from the video including the first door 71 and the second door 72 captured by the second monitoring camera 12. Therefore, the desired areas are extracted by performing the trimming for obtaining the size of the monitoring area used in the normal operation (step S30).

In the example shown in FIG. 7, the bold solid line region X is the original monitoring area of the first monitoring camera 11, and the broken line region Y is the monitoring area of the second monitoring camera 12. That is, a predetermined region is trimmed from the video captured by the second monitoring camera 12, and the trimmed video is used as the video of the monitoring area including the first door 71 and the second door 72.

Further, the server 50 reverses the trimmed videos of the first door 71 and the second door 72 obtained from the second monitoring camera 12 to make the video display direction thereof the same as the video display direction during the normal operation (step S32). Thereafter, an instruction is given to display the reversed videos (step S34) .

Thereafter, the display update of the divided screens of the monitor 80 displaying the first monitoring camera 11 and the second monitoring camera 12 is performed. While the first monitoring camera 11 is broken down, the video of the second monitoring camera 12 is displayed on both of the divided screens for displaying the videos from the first and the second monitoring cameras 11 and 12. The displayed video of the second monitoring camera 12 is trimmed into the size of the monitoring area used in the normal operation of each of the monitoring cameras and the trimmed video is reversed.

FIG. 8 shows an example of a display of the monitoring area shown in FIG. 7, which is an example of the video display state of the monitor 80. In the divided section A 81, the video from the first monitoring camera 11 is originally supposed to be displayed. However, in the case when the first monitoring camera 11 breaks down, the video from the second monitoring camera 12 instead of the first monitoring camera 11, more specifically, a video of a predetermined region (solid line region X) including the first door 71 trimmed in the video from the second monitoring camera 12 is displayed on the divided section A 81. Further, the video from the second monitoring camera 12 is also displayed on the divided section B 82, but a video of a predetermined region (broken line region Y) including the second door 72 trimmed in the video from the second monitoring camera 12 in which the angle of view is adjusted to the wide-angle view is displayed.

Further, if the second monitoring camera 12 is configured to rapidly switch the operations between the setting for the wide-angle view and the setting for returning to the original angle of view, the video from the second monitoring camera 12 obtained in the case when the first monitoring camera 11 is not broken down is used for the capturing area around the second door 72 and the video from the second monitoring camera 12 in which the angle of view is adjusted to the wide-angle view is used only when the video of the first door 71 is acquired and the predetermined region including the first door 71 is extracted.

When the display of the videos is completed, the server 50 determines whether or not to terminate the railway monitoring system (step S24). If it is determined to terminate the railway monitoring system (YES in step S24), the processing flow in steps S10 to S36 is terminated. If it is determined not to terminate the railway monitoring system (NO in step S24), the process returns to the monitoring of the state of the first monitoring camera 11 (step S12).

As described above, according to the first embodiment, in the case when one of the monitoring cameras (i.e., the first to the fourth monitoring cameras 11 to 14) that respectively monitor the doors (i.e., the first to the fourth doors 71 to 74) breaks down and the video from the broken monitoring camera is not displayed on the monitor 80, the video from the monitoring camera that performs the monitoring operation instead of the broken monitoring camera is assigned to a display section in which the video from the broken monitoring camera is supposed to be displayed. Therefore, it is possible to display the videos in the same manner as in the normal operation and further improve the availability and monitoring facilitation.

In addition, when the monitoring camera breaks down, it becomes possible to continue monitoring without any lost time until the monitoring camera is restored and repaired, thereby improving work efficiency and availability. Furthermore, when the monitoring camera breaks down, it is not necessary for a crew member to step outside of the vehicle and visually confirm the vehicle door, thereby improving the work efficiency and monitoring facilitation while reducing the burden on the crew.

### <Second Embodiment, which defines the scope of the invention>

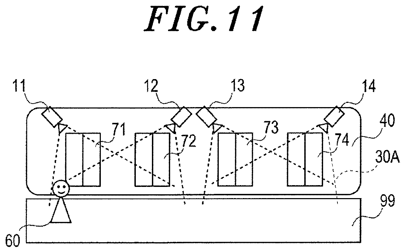

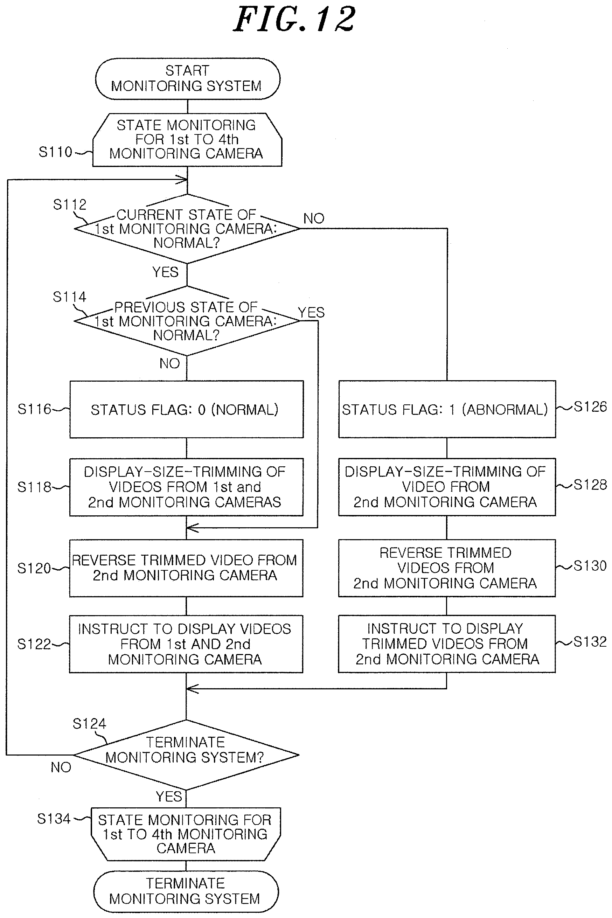

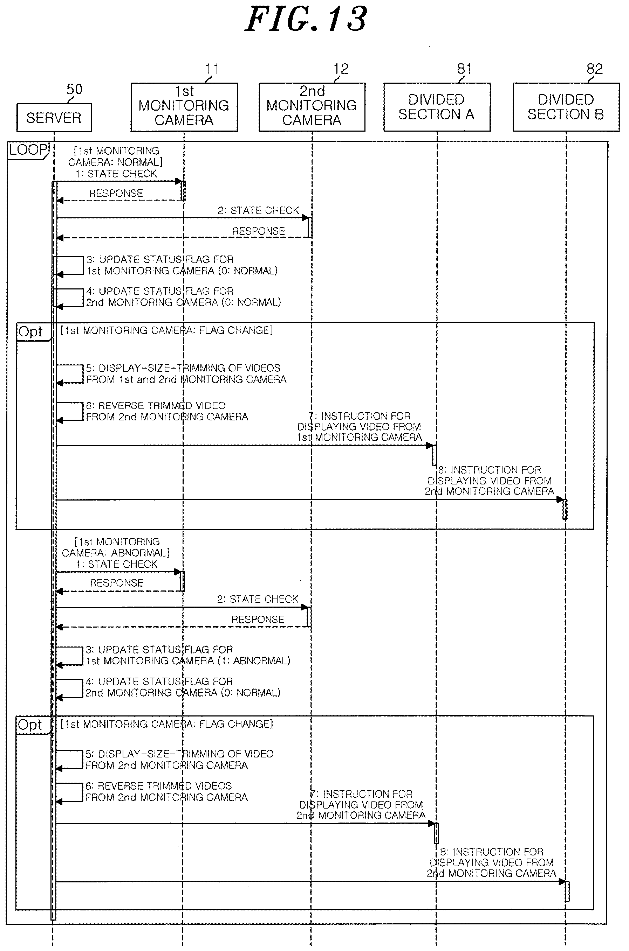

A second embodiment will be described with reference to FIGS. 11 to 13. FIG. 11 schematically shows an operation mode of the second embodiment. FIG. 12 is a flowchart showing an operation of the server 50. FIG. 13 shows an operation sequence for the server 50, the first monitoring camera 11, the second monitoring camera 12, and the monitor 80 (the divided section A 81 and the divided section B 82). The configuration of the railway monitoring system 100 of the second embodiment is the same as that of the first embodiment, so that processing operations thereof will be mainly described hereinafter.

In the second embodiment, when the first monitoring camera 11 breaks down, the angle of view of the second monitoring camera 12 is not widened. Instead, all of the monitoring cameras are set in advance such that each monitoring camera has a wide-angle view (monitoring range 30A) so as to capture an area including a door that is captured by the paired camera thereof. In other words, even in the normal operation, the first monitoring camera 11 captures both the first door 71 and the second door 72, and the second monitoring camera 12 also captures both the first door 71 and the second door 72.

Therefore, when the first monitoring camera 11 breaks down, in the monitoring video of the second monitoring camera 12, the area around the second door 72 is trimmed while the area around the first door 71 is trimmed and reversed. Thus, the monitoring range of the broken first monitoring camera 11 can be covered.

The details of the second embodiment will be described more specifically with reference to the flowchart of FIG. 12 and the operation sequence shown in FIG. 13.

When the railway monitoring system is activated, the server 50 monitors the states of the first to the fourth monitoring cameras 11 to 14 and continues displaying the monitoring videos on the monitor 80 (steps S110 to S134).

First, the server 50 determines whether or not the state of the first monitoring camera 11 is normal (step S112). If it is determined that the first monitoring camera 11 is normal (YES in step S112), the server 50 determines whether or not the previous state (status flag) of the first monitoring camera 11 was normal (step S114).

If it is determined that the previous status flag is "abnormal" (NO in step S114), the server 50 determines that the first monitoring camera 11 has been restored from the failure and updates the status flag of the first monitoring camera 11 to "normal" (step S116). If it is determined that the previous status flag was "normal" (YES in step S114) or after the status flag of the first monitoring camera 11 is updated to "normal," the server 50 executes the trimming of the monitoring area around the first door 71 from the video of the first monitoring camera 11 and the trimming of the monitoring area around the second door 72 from the video of the second monitoring camera 12 (step S118). Then, the trimmed video of the second monitoring camera 12 is reversed (step S120).

Thereafter, the server 50 instructs the monitor 80 to display the videos from the first monitoring camera 11 and the second monitoring camera 12 (step S122).

Next, the display update of the divided screens of the monitor 80 displaying the first monitoring camera 11 and the second monitoring camera 12 is performed. The video from the first monitoring camera 11 is displayed on the divided section A 1, and the video of the second monitoring camera 12 is displayed on the divided section B 82. When the display of the videos is completed, the server 50 determines whether or not to terminate the railway monitoring system (step S124). If it is determined to terminate the railway monitoring system (YES in step S124), the processing flow in steps S110 to S134 is terminated. If it is determined not to terminate the railway monitoring system (NO in step S124), the process returns to the monitoring of the state of the first monitoring camera 11 (step S112).

In the process of determining whether or not the state of the first monitoring camera 11 is normal, if it is determined that the breakdown or failure of the first monitoring camera 11 is detected (NO in step S112), the server 50 sets and updates the status flag of the first monitoring camera 11 to "abnormal" (step S126), the videos of the two management (monitoring) areas around the first door 71 and the second door 72 are trimmed in the videos from the second monitoring camera 12 (step S128), and the two trimmed videos are reversed, respectively (step S130). Then, while the first monitoring camera 11 breaks down or malfunctions, the video from the second monitoring camera 12 is displayed on both of the divided screens for displaying the videos from the first monitoring camera 11 and the second monitoring camera 12 (step S132) .

When the display of the videos is completed, the server 50 determines whether or not to terminate the railway monitoring system (step S124). If it is determined to terminate the railway monitoring system (YES in step S124), the processing flow in steps S110 to S134 is terminated. If it is determined not to terminate the railway monitoring system (NO in step S124), the process returns to the monitoring of the state of the first monitoring camera 11 (step S112).

As described above, according to the second embodiment, the same technical effects as those of the first embodiment can be obtained. Further, the first to the fourth monitoring cameras 11 to 14 can be employed without equipping a mechanical mechanism for adjusting the angle of view so that even an inexpensive camera can be used for cost saving. In addition, it becomes unnecessary to consider such a mechanism failure, so that it is possible to have a long lifespan with no failures.

### <Third Embodiment>

In a third embodiment, for the case when the driver or the crew member sitting in a train driver room or the train control room has difficulty confirming the monitoring areas in the railway monitoring system 100, a control button is prepared on a control screen of a system software, or a control device is prepared such that the video display operation from the paired cameras can be performed even if the first to the fourth monitoring cameras 11 to 14 do not break down. For example, when the video is unclear due to, e.g., lens contamination of the first monitoring camera 11, the video from the second monitoring camera 12 is used. The process of the third embodiment may be performed together with the above-described automatic switching method performed by monitoring the state of the monitoring camera.

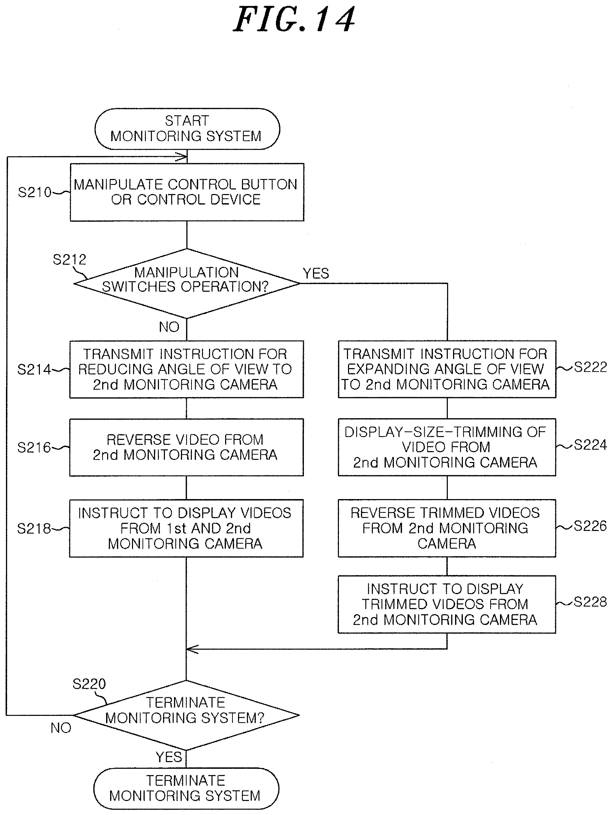

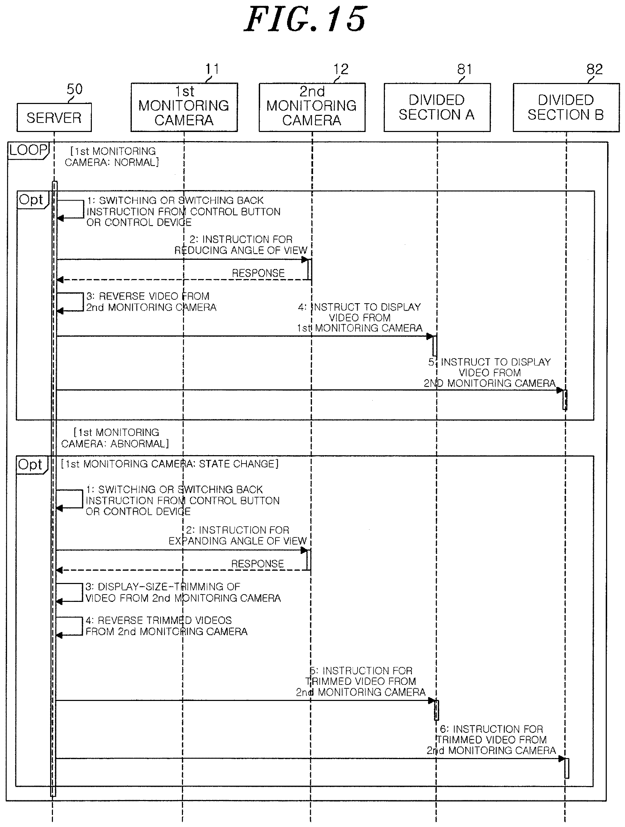

FIG. 14 is a flowchart showing the operation of the server 50. FIG. 15 shows an operation sequence for the server 50, the first monitoring camera 11, the second monitoring camera 12, and the monitor 80 (the divided section A 81 and the divided section B 82). With reference to FIGS. 14 and 15, a switching operation of the monitoring video of the first door 71 from the video from the first monitoring camera 11 to the video from the second monitoring camera 12 and or a switching back operation thereof will be described.

When the control button or the control device is manipulated (step S210), the server 50 determines whether the manipulation is related to a camera switching operation or a camera switching back operation (step S212). If it is determined as the camera switching back operation (NO in step S212), the server 50 transmits an instruction for reducing the angle of view to the second monitoring camera 12 (step S214). Then, the server 50 acquires the video of the first door 71 from the first monitoring camera 11 and the video of the second door 72 from the second monitoring camera 12 in the same manner as in the normal operation.

Then, the server 50 reverses the video of the second monitoring camera 12 (step S216) and instructs the display of the videos from the first monitoring camera 11 and the second monitoring camera 12 (step S218). Accordingly, the video from the first monitoring camera 11 is displayed on the divided section A 81 of the monitor 80, and the video from the second monitoring camera 12 is displayed on the divided section B 82.

On the other hand, if it is determined as the camera switching operation in step S212 (YES in step S212), the server 50 transmits an instruction for expanding the angle of view to the second monitoring camera 12 (step S222). In response to the instruction, the second monitoring camera 12 expands the angle of view thereof.

When a response to the instruction of the wide-angle view is received from the second monitoring camera 12, the server 50 performs trimming to obtain a predetermined display size for each of the area around the first door 71 and the area around the second door 72 from the video from the second monitoring camera 12 (step S224). Then, the two trimmed videos are reversed (step S226), and the monitor 80 is instructed to display these videos (step S228). As a result, the video of the first door 71 and the video of the second door 72 that are captured by the second monitoring camera 12 are displayed on the divided section A 81 and the divided section B 82 of the monitor 80, respectively.

After the display instruction to the monitor 80 is completed (step S218 or step S228), the server 50 terminates the monitoring system when it is determined to terminate the railway monitoring system (YES in step S220) or returns to the step of detecting the manipulation of the control button or the control device (step S210) when it is determined not to terminate the railway monitoring system (NO in step S220).

### <Fourth Embodiment>

In a fourth embodiment, a marker is set in advance in the capturing range of each of the first to the fourth monitoring cameras 11 to 14 to provide a threshold. When a marker identification state falls below the threshold due to contaminations or scratches on the lens, the video monitoring is determined to be difficult. Then, one of the paired monitoring cameras is stopped and the video captured by the other monitoring camera is used instead.

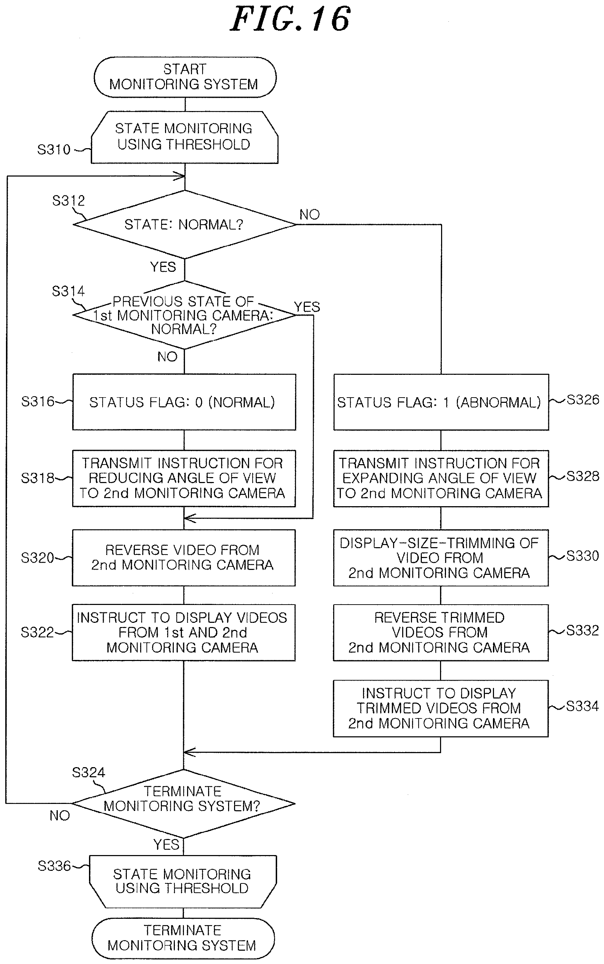

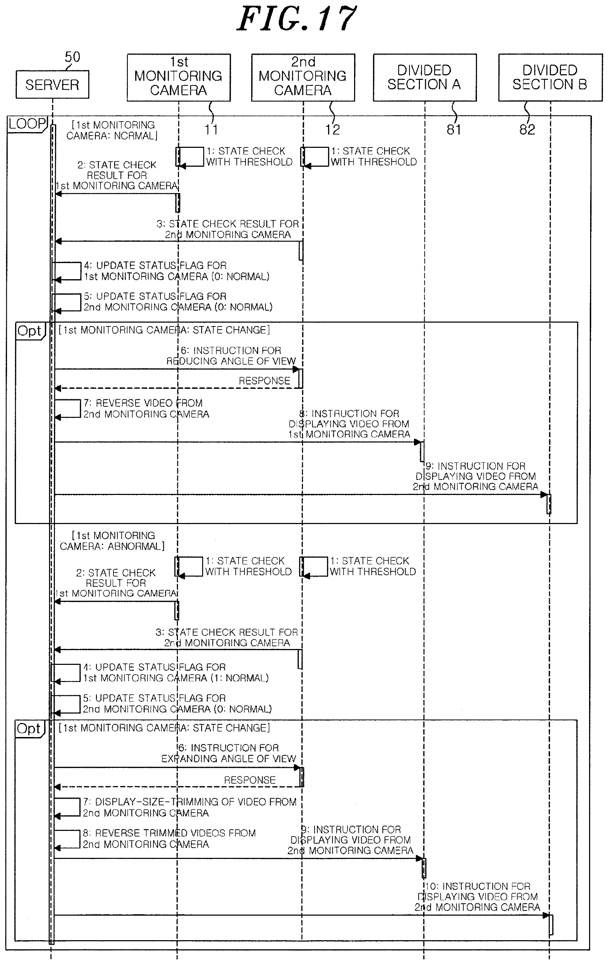

For example, when the marker identification state is restored to a state that exceeds the threshold in the capturing range of the first monitoring camera 11, it is determined that the video can resume monitoring, so that the switching back operation is performed to use the video from the first monitoring camera 11. The process of the fourth embodiment will be described with reference to the flowchart of FIG. 16 and the operation sequence shown in FIG. 17.

When the railway monitoring system is activated, the server 50 monitors the states of the first to fourth monitoring cameras 11 to 14 and continues displaying the monitoring videos on the monitor 80 (steps S310 to S336).

The server 50 identifies a marker provided in advance in the capturing range, compares it with a predetermined threshold, and determines whether or not the captured video is in a normal state suitable for monitoring (step S312). If it is determined that the first monitoring camera 11 is in the normal state (YES in step S312), the server 50 determines whether or not the state at the previous determination was normal (step S314).

If it is determined that the previous status flag is "abnormal" (NO in step S314), the server 50 determines that the first monitoring camera 11 has recovered from the abnormality and updates the status flag of the first monitoring camera 11 to "normal" (step S315). Then, an instruction for reducing the angle of view (that is, an instruction for returning back to the size of the angle of view used in the normal operation) is transmitted to the second monitoring camera 12 that is currently operated with the wide-angle view (step S318). The first monitoring camera 11 that has received the instruction to reduce the angle of view adjusts the angle of view so as to return to the original size used in the normal operation.

If it is determined that the previous status flag was "normal" (YES in step S314) or after the instruction for reducing the angle of view is transmitted to the second monitoring camera 12 (step S318), the server 50 reverses the video acquired from the second monitoring camera 12 (step S320) and instructs, as a display process during the normal operation, the monitor 80 to display the videos of the first monitoring camera 11 and the second monitoring camera 12 on the monitor 80 (step S322).

Thereafter, the display update of divided screens of the monitor 80 displaying the first monitoring camera 11 and the second monitoring camera 12 is performed. The video of the first monitoring camera 11 is displayed on the divided section A 81, and the video of the second monitoring camera 12 is displayed on the divided section B 82.

When the display is completed, the server 50 determines whether or not to terminate the railway monitoring system (step S324). If it is determined to terminate the railway monitoring system (YES in step S324), the processing flow in steps S310 to S336 is terminated. If it is determined not to terminate the railway monitoring system (NO in step S324), the process returns to the monitoring of the state of the first monitoring camera 11 (step S312).

In the process of determining whether or not the first monitoring camera 11 is in the normal state, if it is determined that the abnormality of the first monitoring camera 11 (i.e., the abnormality of the marker identification state) is detected (NO in step S312), the server 50 updates the status flag of the first monitoring camera 11 to "abnormal" (step S326) and transmits an instruction for expanding the angle of view to the second monitoring camera 12 that is paired with the first monitoring camera 11 (step S328).

The second monitoring camera 12 that has received the instruction for expanding the angle of view adjusts the angle of view so as to obtain a wider angle of view than that used in the normal operation. As a result, as described above with reference to FIG. 6, the video from the second monitoring camera 12 includes a wide area including both the first door 71 and the second door 72. Accordingly, the second monitoring camera 12 acquires video through which both the first door 71 and the second door 72 are monitored.

The server 50 performs a display size trimming process for extracting areas around the first door 71 and the second door 72 from the video including the first door 71 and the second door 72 captured by the second monitoring camera 12. Then, the trimming for obtaining the size of the monitoring area used in the normal operation is performed (step S330).

Further, the server 50 reverses the trimmed videos of the first door 71 and the second door 72 obtained from the second monitoring camera 12 to make the video display direction thereof the same as the video display direction during the normal operation (step S332). Then, an instruction is given to display the reversed videos (step S334).

Thereafter, the display update of divided screens of the monitor 80 displaying the first monitoring camera 11 and the second monitoring camera 12 is performed. While the first monitoring camera 11 breaks down or malfunctions, the video of the second monitoring camera 12 is displayed on both of the divided screens for displaying the videos from the first monitoring camera 11 and the second monitoring camera 12. The displayed video from the second monitoring camera 12 is trimmed into the size of the monitoring area used in the normal operation of each of the monitoring cameras and the trimmed video is reversed.

When the display is completed, the server 50 determines whether or not to terminate the railway monitoring system (step S324). If it is determined to terminate the railway monitoring system (YES in step S324), the processing flow in steps S310 to S336 is terminated. If it is determined not to terminate the railway monitoring system (NO in step S324), the process returns to the monitoring of the state of the first monitoring camera 11 (step S312).

### <Fifth Embodiment>

In a fifth embodiment, the railway monitoring system is employed to the case where the number of vehicle doors is an odd number such as one vehicle (vehicle 40) having a three-door configuration. FIG. 18 shows a configuration thereof. The first monitoring camera 11 has a wide-angle view set in advance to cover a monitoring range 30B. Here, the first monitoring camera 11 monitors the first door 71 and the second door 72.

Further, the second monitoring camera 13 monitors the third door 73 in the normal monitoring range 30C. The monitoring of the second door 72 may be performed by the second monitoring camera 13 or may be performed by both the first monitoring camera 11 and the second monitoring camera 13.

For example, when the first monitoring camera 11 breaks down, the angle of view of the second monitoring camera 13 is widened to capture video of the first to the third doors 71 to 73. On the other hand, when the second monitoring camera 13 breaks down, the angle of view of the first monitoring camera 11 is further widened to capture the videos of the first to the third doors 71 to 73. Although the angle of view and the number of trimmings are different from those in the case of the 4-door configuration, the flowcharts and sequences of the respective processes can be implemented by the same processes as those shown in FIG. 9, FIG. 10 and FIGS. 12 to 17.

While certain embodiments of the present invention have been described, these embodiments have been presented by way of example only and it will be understood by those skilled in the art that various modifications can be made by combining elements in different embodiments. The scope of the invention is defined by the second embodiment.

For example, in the above-described embodiments, the operation mode for monitoring the vehicle door by using the monitoring camera installed outside of the vehicle is realized. However, an operation mode for monitoring the vehicle door from inside of the vehicle or an operation mode for monitoring inside the vehicle may be realized. Further, the trimming timing and the reversal timing of the video may be interchanged, and the processing order can be appropriately set in view of processing efficiency.

### Description of Reference Numerals

1-4: first to fourth vehicles
11-14, 11a-14a, 11b-14b: first to fourth monitoring cameras
30, 30A-30C: monitoring range
40: vehicle
50: server
51: video recorder
52: host server
71-74: first to fourth doors
80: monitor
81-84: divided sections A to D
99: station platform
100: railway monitoring system
140, 142: monitor PC
144-147: L2-SW

## Claims

1. A monitoring system for monitoring multiple vehicle doors of a vehicle with multiple cameras, comprising:
a first camera configured to capture a first door and a second door of the vehicle;
a second camera configured to capture the first door and the second door of the vehicle; and
a controller configured to acquire a video from the first camera and a video from the second camera, and monitor states of the first camera and the second camera,
wherein when the state of the first camera is normal and the state of the second camera is normal, the controller trims an area around the first door in the video from the first camera and an area around the second door in the video from the second camera, reverses a video of the second door trimmed in the video from the second camera, and instructs a monitor to display the videos from the first camera and the second camera, and
when the state of the first camera is abnormal and the state of the second camera is normal, the controller trims the area around the first door and the area around the second door in the video from the second camera, reverses a video of the first door and a video of the second door trimmed in the video from the second camera, and instructs the monitor to display the videos from the second camera.

2. A monitoring method for monitoring multiple vehicle doors of a vehicle with multiple cameras, comprising:
capturing a first door and a second door of the vehicle by each of a first camera and a second camera among the multiple camera;
monitoring states of the first camera and the second camera;
trimming an area around the first door in a video from the first camera and an area around the second door in a video from the second camera, reversing a video of the second door trimmed in the video from the second camera, and displaying the videos from the first camera and the second camera when the state of the first camera is normal and the state of the second camera is normal; and
trimming the area around the first door and the area around the second door in a video from the second camera, reversing a video of the first door and a video of the second door trimmed in the video from the second camera, and displaying the videos from the second camera when the state of the first camera is abnormal and the state of the second camera is normal.

## Patentansprüche

1. Überwachungssystem zur Überwachung mehrerer Fahrzeugtüren eines Fahrzeugs mit mehreren Kameras, umfassend:
eine erste Kamera, die dazu eingerichtet ist, eine erste Tür und eine zweite Tür des Fahrzeugs zu erfassen;
eine zweite Kamera, die dazu eingerichtet ist, die erste Tür und die zweite Tür des Fahrzeugs zu erfassen; und
eine Steuervorrichtung, die dazu eingerichtet ist, ein Video von der ersten Kamera und ein Video von der zweiten Kamera zu erlangen und Zustände der ersten Kamera und der zweiten Kamera zu überwachen,
wobei, wenn der Zustand der ersten Kamera normal und der Zustand der zweiten Kamera normal ist, die Steuervorrichtung einen Bereich um die erste Tür in dem Video von der ersten Kamera und einen Bereich um die zweite Tür in dem Video von der zweiten Kamera beschneidet, ein Video der zweiten Tür, das in dem Video von der zweiten Kamera beschnitten wurde, umkehrt und einen Monitor anweist, die Videos von der ersten Kamera und der zweiten Kamera anzuzeigen, und
wobei, wenn der Zustand der ersten Kamera abnormal und der Zustand der zweiten Kamera normal ist, die Steuervorrichtung den Bereich um die erste Tür und den Bereich um die zweite Tür in dem Video der zweiten Kamera beschneidet, ein Video der ersten Tür und ein Video der zweiten Tür, die in dem Video von der zweiten Kamera beschnitten wurden, umkehrt und den Monitor anweist, die Videos der zweiten Kamera anzuzeigen.

2. Überwachungsverfahren zur Überwachung mehrerer Fahrzeugtüren eines Fahrzeugs mit mehreren Kameras, umfassend:
Erfassen einer ersten Tür und einer zweiten Tür des Fahrzeugs durch jeweils eine erste Kamera und eine zweite Kamera der mehreren Kameras;
Überwachen von Zuständen der ersten Kamera und der zweiten Kamera;
Beschneiden eines Bereichs um die erste Tür in einem Video von der ersten Kamera und eines Bereichs um die zweite Tür in einem Video von der zweiten Kamera, Umkehren eines Videos der zweiten Tür, das in dem Video von der zweiten Kamera beschnitten wurde, und Anzeigen der Videos von der ersten Kamera und der zweiten Kamera, wenn der Zustand der ersten Kamera normal ist und der Zustand der zweiten Kamera normal ist; und
Beschneiden des Bereichs um die erste Tür und des Bereichs um die zweite Tür in einem Video von der zweiten Kamera, Umkehren eines Videos der ersten Tür und eines Videos der zweiten Tür, die in dem Video von der zweiten Kamera beschnitten wurden, und Anzeigen der Videos von der zweiten Kamera, wenn der Zustand der ersten Kamera abnormal und der Zustand der zweiten Kamera normal ist.

## Revendications

1. Système de surveillance pour surveiller de multiples portes de véhicule d'un véhicule avec de multiples caméras, comprenant :
une première caméra configurée pour capturer une première porte et une seconde porte du véhicule ;
une seconde caméra configurée pour capturer la première porte et la seconde porte du véhicule ; et
un dispositif de commande configuré pour acquérir une vidéo depuis la première caméra et une vidéo depuis la seconde caméra, et surveiller des états de la première caméra et de la seconde caméra,
dans lequel, lorsque l'état de la première caméra est normal et l'état de la seconde caméra est normal, le dispositif de commande découpe une zone autour de la première porte dans la vidéo depuis la première caméra et une zone autour de la seconde porte dans la vidéo depuis la seconde caméra, inverse une vidéo de la seconde porte découpée dans la vidéo depuis la seconde caméra, et instruit à un moniteur d'afficher les vidéos depuis la première caméra et la seconde caméra, et
lorsque l'état de la première caméra est anormal et l'état de la seconde caméra est normal, le dispositif de commande découpe la zone autour de la première porte et la zone autour de la seconde porte dans la vidéo depuis la seconde caméra, inverse une vidéo de la première porte et une vidéo de la seconde porte découpée dans la vidéo depuis la seconde caméra, et instruit au moniteur d'afficher les vidéos depuis la seconde caméra.

2. Méthode de surveillance pour surveiller de multiples portes de véhicule d'un véhicule avec de multiples caméras, comprenant :
la capture d'une première porte et d'une seconde porte du véhicule par chacune d'une première caméra et d'une seconde caméra parmi les multiples caméras ;
la surveillance des états de la première caméra et de la seconde caméra ;
le découpage d'une zone autour de la première porte dans la vidéo depuis la première caméra et d'une zone autour de la seconde porte dans la vidéo depuis la seconde caméra, l'inversion d'une vidéo de la seconde porte découpée dans la vidéo depuis la seconde caméra, et l'affichage des vidéos depuis la première caméra et la seconde caméra lorsque l'état de la première caméra est normal et l'état de la seconde caméra est normal ; et
le découpage de la zone autour de la première porte et de la zone autour de la seconde porte dans une vidéo depuis la seconde caméra, l'inversion d'une vidéo de la première porte et d'une vidéo de la seconde porte découpée dans la vidéo depuis la seconde caméra, et l'affichage des vidéos depuis la seconde caméra lorsque l'état de la première caméra est anormal et l'état de la seconde caméra est normal.
